## Europäisches Patentamt
## European Patent Office
## Office européen des brevets

(19)

(11) Veröffentlichungsnummer: **0 183 188 B1**

(12) # EUROPÄISCHE PATENTSCHRIFT

(45) Veröffentlichungstag der Patentschrift: 06.03.91

(51) Int. Cl.<sup>5</sup>: **F16L 47/02, B29C 65/34**

(21) Anmeldenummer: **85114785.0**

(22) Anmeldetag: **21.11.85**

(54) **Elektrisch schweissbares Verbindungselement zum Verbinden von bzw. mit Rohrleitungsteilen.**

(30) Priorität: **29.11.84 CH 5701/84**

(43) Veröffentlichungstag der Anmeldung:
**04.06.86 Patentblatt 86/23**

(45) Bekanntmachung des Hinweises auf die
Patenterteilung:
**06.03.91 Patentblatt 91/10**

(84) Benannte Vertragsstaaten:
**AT BE CH DE FR GB IT LI LU NL SE**

(56) Entgegenhaltungen:
**EP-A- 0 103 075**
**CH-A- 396 536**
**DE-A- 1 479 231**
**DE-A- 1 615 092**
**US-A- 4 436 988**

(73) Patentinhaber: **VON ROLL AG**

**CH-4563 Gerlafingen(CH)**

(72) Erfinder: **Meier, Max**
**Grossmatt**
**CH-4571 Lüterkofen(CH)**
Erfinder: **Rüede, Ernst**
**Viaduktstrasse 20**
**CH-4512 Bellach(CH)**

(74) Vertreter: **EGLI-EUROPEAN PATENT ATTOR-
NEYS**
**Horneggstrasse 4**
**CH-8008 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifrt ein elektrisch schweissbares Verbindungselement gemäss oberbegriss der Ausipruchs 1.

Elektrisch schkeissbare Verbindungselemente aus thermoplastischem Werkstoff der vorstehend beschriebenen Art sind in verschiedenen Ausführungen bekannt. Sie werben einerseits als elektrisch schweissbare Rohrmuffen und andererseits als elektrisch schweissbare Rohrsattelstücke hergestellt. Bei der elektrisch schweissbaren Rohrmuffe ist ein Heizelement, meist in Form einer Wicklung aus einem Widerstandsheizdraht an der Innenwandung des Muffenkörpers verlegt. Bei der Beschikkung des Heizelementes mit elektrischer Energie entsteht um dasselbe im Muffenkörper und in den Partien der Rohrleitungsteile eine Schmelzzone, die beim Erstarren in eine die dichte Verbindung zwischen der Muffe und den Rohrleitungsteilen gewährleistende Schweisszone übergeht. Unter Rohrleitungsteilen werden alle für den Rohrleitungsbau erforderlichen Elemente verstanden, d.h. gerade und gebogene Rohrstücke, Formstücke und Armaturen (Abschlussorgane).

Elektrisch schweissbare Rohrsattelstücke werden für den Anschluss einer Leitungsabzweigung an einer Rohrleitung eingesetzt und weisen einen Sattelkörper auf, in dem an der auf die Rohrleitung aufzusetzende konkaven Wandung ebenfalls ein Heizelement eingebettet ist, mit dem eine sich um die Anbohrstelle erstreckende Schweisszone gebildet wird.

Bei den vorstehend genannten elektrisch schweissbaren Verbindungselementen bildet die Gewährleistung der vorgegebenen Schweissenergie pro Flächeneinheit ein wichtiges Problem. Das bedingt sowohl eine präzise Energiezuteilung sowie Widerstandsdrähte mit engem Toleranzfeld und definierter Temperatur-Charakteristik als auch die Einhaltung der jedem Verbindungselement zugrundegelegten Drahtverteilung. Bezüglich der Drahtverteilung sind zwei Zustände von Bedeutung, nämlich der Zustand vor dem Schweissen und der Zustand gegen Ende der Schweissung, wenn das den Widerstandsheizdraht umgebende Material des Verbindungselementes und der Rohrleitungsteile verflüssigt ist. Beim Zustand vor dem Schweissen ist es wichtig, dass der in Windungen verlegte Widerstandsheizdraht schon im angelieferten, ungeschweissten Verbindungselement für eine optimale Verteilung der Schweissenergie pro Flächeneinheit angeordnet ist. Beim Zustand gegen Ende der Schweissung wird der Widerstandsheizdraht seiner ihn fixierenden Umbettung weitgehend beraubt; deshalb muss dafür gesorgt werden, dass durch das zufällige Zusammenstossen benachbarter Drahtwindungen die Schweissleistung nicht beeinträchtigt werden kann.

Erfahrungsgemäss können Widerstandsheizdrähte von Verbindungselementen während ihrer im Spritzguss erfolgenden Herstellung unter dem Einfluss der in die Form einströmenden Spritzgussmasse verschoben werden, wenn eine ausreichende Reibung zwischen dem Widerstandsheizdraht und der Spritzgussform fehlt. Eine entsprechende Aufrauhung der mit dem Draht in Berührung stehenden Partie der Spritzgussform ist in den meisten Fällen im Hinblick auf die Entformung des Spritzlings und wegen unerwünschter Oberflächenmarkierungen nicht möglich. Nun ist es zwar bekannt (CH- A- 396 536), den Widerstandsheizdraht vor seiner Einbringung in die Spritzgussform mit einer Umhüllung aus Kunststoff zu umgeben. Da jedoch die Umhüllung einen Kreisquerschnitt aufweist, ist auch hier der Verschiebewiderstand nicht ausreichend, um das Verschieben der Windungen beim Einströmen der Spritzgussmasse in die Form zu verhindern. Aus USA-U-4 436 988 ist eine Schweisshülse bekannt, die aus Windungen eines Widerstandsheizdrahtes besteht, wobei der Widerstandsheizdraht durch eine rechteckförmige Umhüllung umgeben ist. Für die Bildung einer Schweisshülse werden Windungen gebildet, die mit zwei gegenüberliegenden Rechteckseiten aneinander anstossen und damit eine zusammenhängende Wandung bilden. Zum Zusammenhalten der Windungen werden diese an den aneinanderstossenden Seiten miteinander verbunden. Die Verwendung dieser Hülse setzt jedoch voraus, dass eines der zu verbindenden Rohrteile ein Muffenende aufweist.

Aufgabe der Erfindung ist es, ein elektrisch schweissbares Verbirdungselement der eingangs beschriebenen Art so weiterzuentwickeln, dass in dem Zustand vor dem Schweissen, d.h. beim Herstellen des Verbindungselementes, die Windungen des Widerstandsheizdrahtes in der für eine optimale Schweissenergieabgabe pro Flächeneinheit erforderlichen Lage zuverlässig positioniert sind urd in dem Zustand gegen Ende der Schweissung eine Beeinträchtigung der Schweissleistung zuverlässig vermieden sowie eine innige Verbindung der äussern Umhüllung mit dem Formkörpermateriai zuverlässig erreicht wird.

Diese Aufgabe wird durch die Merkmale des kennzeichnenden Teils des Auspruchs 1 gelört.

Dadurch wird erreicht, dass einerseits mit der zweiten Umhüllung ein ausreichender Verschiebewiderstand gegenüber der an und für sich naheliegenden kreisförmigen Querschnittsform, die im Querschnitt gesehen nur eine punktförmige Auflage aufweist, entscheidend verbessert wird und mit der ersten Umhüllung mittels eines speziell temperaturresistenten Materiais während der in Betracht fallenden Zeitspanne eine ausreichende Isolation gegen einen elektrischen Ueberschlag zwischen benachbarten Wirdungen des Widerstandsheizdrahtes bewirkt wird. Dank der Kombination von erster und zweiter Umhüllung wird die erste Umhüllung von einer schädigenden Ueberhitzung bewahrt, weil die bei einer unter der thermischen Schadensgrenze der ersten Umhüllung schmelzenden zweiten Umhüllung durch Ableitung von Schmelzwärme die Drahttemperatur in erträglichen Grenzen hält.

Die Erfindung ist in der Zeichnung in zwei Ausführungsbeispielen dargestellt und nachfolgend beschrieben. Es zeigen:

Fig. 1    einen Längsschnitt einer schematisch dargestellten elektrisch schweissbaren Muffe, die auf Partien zweier Rohrleitungsteile aufgeschoben ist,

Fig. 2    einen Längsschnitt eines auf einen Rohrleitungsteil aufgebrachten Anbohrsattels,

Fig. 4    Querschnitte durch erfindungsgemäss ausgebildete Widerstandsheizdrähte mit verschiedenen Formen der zweiten Umhüllung und

Fig. 5    einen Schnitt einer Drahtanordnung mit einer auf die Drahtdistanz abgestimmten zweiten Umhüllung.

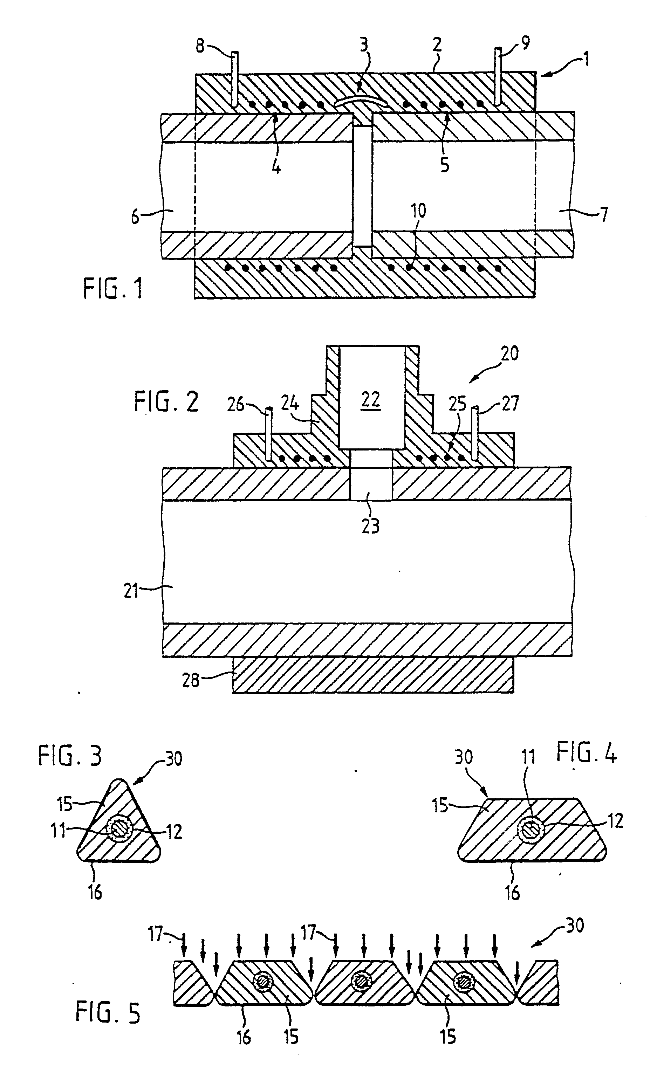

In Fig. 1 ist das elektrisch schweissbare Verbindungselement eine Muffe 1 die sich aus einem Muffenkörper 2 aus einem thermoplastischen Kunststoff, einer an der Innenwandung des Muffenkörpers 2 eingebetteten elektrischen Heizwicklung 3, deren Windungen je ein Heizelement 4, 5 bilden, und zwei Anschlüssen 8, 9 für die Beschickung der Heizwicklung 3 mit elektrischer Schweissenergie zusammensetzt.

Die beiden Heizelemente 4, 5 bilden bei dem Schweissvorgang je eine Schmelzzone im Muffenkörper 2 und in den in den Muffenkörper 2 ragenden Partien zweier Rohrleitungsteile 6, 7, die nach dem Erstarren des Kunststoffmaterials eine dichte Schweisszone bilden.

In Fig. 1 sind die Windungen 10 der Heizdrahtwicklung 3 mit etwas Abstand von der konkaven Innenwandung dargestellt, um damit die zwischen den Drahtwindungen 10 und der Innenfläche des Muffenkörpers 2 liegende Drahtumhüllung erkennlich zu machen.

In Fig. 2 ist das elektrisch schweissbare Verbindungselement ein Anbohrsattel 20, der dazu dient, an einer Rohrleitung 21 eine Abzweigleitung 22 anzuschliessen, wofür in der Wand der Rohrleitung 21 eine Durchgangsöffnung 23 gebohrt wird. Der in Fig. 2 dargestellte Anbohrsattel 20 setzt sich aus einem Abzweigstück 24, einer in der Nähe der rohrleitungsseitigen, konkaven Wandfläche des Abzweigstückes 24 eingebettete elektrische Heizdrahtwicklung 25 und Anschlüssen (26, 27) für die Beschickung der Heizdrahtwicklung 25 mit elektrischer Schweissenergie sowie gegebenenfalls aus einem Gegenstück 28 in Form einer Halbschale zur Vervollständigung der Umfassung der Rohrleitung 21 zusammen. Die Heizdrahtwicklung 25 ist im Abzweigstück 24 um die Achse der Abzweigleitung 22 angeordnet. Hierbei ist wie bei dem Muffenkörper 2 in Fig. 1 der Widerstandsheizdraht etwas von der konkaven Wandfläche des Abzweigstückes 24 weg in das Wandinnere verlegt dargestellt.

Fig. 3 und 4 zeigen in vergrössertem Massstab Querschnitte von Widerstandsheizdrähten mit verschiedenen Umhüllungsformen 30. Der Widerstandsheizdraht 11 ist zunächst von einer ersten Umhüllung 12 umgeben, die aus einem ein- oder mehrschichtig aufgetragenen Werkstoff besteht, der mit dem Werkstoff des Formkörpers, d.h. des Muffenkörpers 2 oder des Abzweigstückes 24, keine Verbindung eingeht. Zweckmässig besteht die die erste Umhüllung 12 bildende Schicht aus einem Lack. Auch kann ein thermoplastischer, ein duroplastischer oder ein vernetzter thermoplastischer Werkstoff verwendet werden, sofern er beim Schweissvorgang keine Verbindung mit dem Werkstoff des Formkörpers eingeht. Die Schichtdicke der ersten Umhüllung 12 beträgt hierbei max. 0,8 mm.

Um die erste Umhüllung 12 liegt eine zweite Umhüllung 15 aus einem mit dem Werkstoff des Verbindungselementes identischen oder verwandten Material. Wichtig ist, dass die Kurzzeit-Hitzebeständigkeit der ersten Umhüllung 12 eindeutig über dem Schmelzpunkt des Materials der zweiten Umhüllung 15 liegt, damit die zur Bildung der Schmelzzone erforderliche Schweissenergie eine störende thermische Schädigung der ersten Umhüllung 12 während der Zeit der Energiebeschickung verhindern kann.

In Fig. 3 und 4 weist die zweite Umhüllung 15 mindestens eine, im Schnitt eine Gerade 16 bildende Umfangspartie auf, die als stärker ausgezogene Linie dargestellt ist. Der dreieckförmige bzw. trapezförmige Querschnitt der Umhüllung 30 nach Fig. 3 und 4 weist den Vorteil auf, dass selbst dann, wenn Drähte mit dieser Querschnittsform sich berührend verlegt werden, wegen der Spaltbildung im Berührungsbereich eine einwandfreie Verbindung zwischen der zweiten Umhüllung 15 und dem Material des Formkörpers während der spritzgusstechnischen Herstellung des Verbindungselementes gewährleistet ist.

Fig. 5 zeigt eine solche Drahtanordnung mit Drähten 30 mit einer trapezförmigen zweiten Umhüllung 15, wobei die stärker dargestellte Umfangspartie der zweiten Umhüllung 15 die gerade Partie bildet, die in die konkave Schweissfläche des Verbindungselementes zu liegen kommt. Die Pfeile 17 deuten hierbei die Zugänglichkeit der Spritzgussmasse bis in den Bereich der konkaven Wandung des Verbindungselementes dar. Der in Fig. 5 dargestellte Kontakt zwischen benachbarten Widerstandsdrähten 30 erhöht zusätzlich den aufgrund der breiten Auflage der Umfangspartie 16 erzielten Widerstand gegen eine seitliche Drahtverschiebung.

**Ansprüche**

1. Elektrisch schweissbares Verbindungselement zum Verbinden von Rohrleitungsteilen (6, 7, 21) aus thermoplastischem Kunststoff mit einem aus unmittelbar aufeinanderfolgenden Windungen eines Widerstandsheizdrahtes (10, 30) mit einer äusseren Umhüllung (15) aus thermoplastischem Material, welche eine im Querschnitt etwa eine Gerade (16) bildende, in der Schmelzzone an der inneren Wand des Verbindungselements liegende Umfangspartie aufweist und einer inneren Umhüllung (12) aus einem mit dem Werkstoff der äusseren Umhüllung (15) keine Verbindung eingehenden Werkstoff gebildeten Heizelement (4, 5, 25) und Anschlüssen (8, 9; 26, 27) zum Beschicken desselben mit elektrischer Energie zur Wärmeerzeugung zwecks Bildung einer in die Schweisszone übergehenden Schmelzzone in dem Verbindungselement und in den mit diesem in Kontakt stehenden Rohrleitungsteilen (6, 7, 21), **dadurch gekennzeichnet,** dass die Windungen von einem Formkörper (1, 20) aus thermoplastischem Material ähnlich dem der Rohrleitungsteile (6, 7, 21) und der äusseren Umhüllung des Widerstandsheizdrahtes (10, 30) umgeben und in demselben durch eine gleichfalls thermoplastische Spritzgussmasse fixiert sind und dass besagte äussere Umhüllung (15) des Widerstandsheizdrahtes (10, 30) einen dreieckigen oder trapezförmigen Querschnitt aufweist, wobei, in letzterem Fall die längere Basis des Trapezes die an der Innenwand des Verbindungselements liegende Gerade (6) bildet.

2. Verbindungselement nach Anspruch 1, **dadurch gekennzeichnet,** dass die innere Umhüllung (12) ein thermoplastischer, duroplastischer oder vernetzter thermoplastischer Werkstoff ist.

3. Verbindungselement nach Anspruch 1, **dadurch gekennzeichnet,** dass die innere Umhüllung (12) ein Lack ist.

**Claims**

1. Electrically woldable connection element for connecting tubular conduit parts (6, 7, 21) of thermoplastics plastic material with a heating element (4, 5, 25) formed of directly following resistance heating wire windings (10, 30) with an outer cover (15) of thermoplastic material which has in cross section a peripheral portion substantially forming a straight line (16) lying in the melting zone against the inner wall of the connection element and an inner cover (12) formed of a material which undergoes no bonding to the material of the outer cover (15) and connections (8, 9; 26, 27) for providing the same with electrical energy for the generation of heat with the object of forming a melting zone which transforms into the weld zone in the connection element and in the tubular conduit parts (6, 7, 21) which are located in contact with this, characterised in that the windings of a moulded body (1, 20) of thermoplastic material similar to those of the tubular conduit parts (6, 7, 21) and which surround the outer cover of the resistance heating wire (10, 30) and are fixed in the same by a likewise thermoplastic injection moulding composition and the laid outer cover (15) of the resistance heating wire (10, 30) has a triangular or trapezoidal section, wherein, in the latter case, the longer base of the trapezium forms the straight line (6) lying against the inner wall of the connection element.

2. Connection element according to Claim 1, characterized in that the inner cover (12) is a thermoplastic, thermosetting or crosslinked thermoplastic material.

3. Connection element according to Claim 1, characterized in that the inner cover (12) is a lacquer.

**Revendications**

1. Elément de raccordement soudable électriquement pour la connexion de tronçons de conduit (6, 7, 21) en matière thermoplastique comprenant un élément chauffant (4, 5, 25) constitué par un fil chauffant de résistance (10, 30) comportant des spires qui se suivent directement, avec une enveloppe extérieure (15) en matière thermoplastique présentant une partie périphérique qui, en section, forme sensiblement une droite (16) située dans la zone de fusion sur la paroi intérieure de l'élément de raccordement, et avec une enveloppe intérieure (12) en une matière ne se combinant pas avec la matière de l'enveloppe extérieure (15), ainsi que des raccordements (8, 9; 26, 27) pour alimenter l'élément chauffant en énergie électrique pour produire de la chaleur afin de créer une zone de fusion devenant la zone de soudure dans l'élément de raccordement et dans les tronçons de conduit (6, 7, 21) en contact avec celui-ci, caractérisé en ce que les spires sont entourées par une pièce moulée (1, 20) en matière thermoplastique analogue à celle des tronçons de conduit (6, 7, 21) et de l'enveloppe extérieure du fil chauffant de résistance (10, 30), et en ce qu'elles sont noyées dans celle-ci par une masse de moulage également thermoplastique, et en ce que ladite enveloppe extérieure (15) du fil chauffant de résistance (10, 30) présente une section triangulaire ou trapézoidale, et dans le dernier cas la base la plus longue du trapèze constitue la droite (6) située sur la paroi intérieure de l'élément de raccordement.

2. Elément de raccordement suivant la revendication 1, caractérisé en ce que l'enveloppe intérieure (12) est une matière thermoplastique, duroplastique ou une matière thermoplastique réticulée.

3. Elément de raccordement suivant la revendicntion 1, caractérisé en ce que l'enveloppe intérieure (12) est un vernis.

FIG. 1

FIG. 2

FIG. 3

FIG. 4

FIG. 5